# DEMANDE DE BREVET EUROPEEN

(11) **EP 2 141 591 A1**
(43) Date de publication de la demande: **06.01.2010**
(21) Numéro de dépôt: 09290479.6
(22) Date de dépôt: 23.06.2009
(51) Int. Cl.: G06F 9/445

(54) **Dispositif électronique portable comprenant une application portable et un module sécurisé pouvant comminique entre eux, et procédé de communication associé**

(30) Priorité: 04.07.2008 FR 0854579
(71) Demandeur: OBERTHUR TECHNOLOGIES, 92300 Levallois-Perret (FR)
(72) Inventeur: Jayet, Stéphane, 69330 Meyzieu (FR); Moyart, Didier, 69006 Lyon (FR)
(74) Mandataire: Bonnans, Arnaud

(57) **Abrégé**

La présente invention concerne un dispositif électronique (18) agencé pour être connecté, de façon amovible, à une station hôte (10), le dispositif comprenant une application portable (242) apte à être exécutée sur ladite station hôte (10) et au moins une interface (260) de module sécurisé (26), par exemple un module de carte à puce intelligente, le dispositif comprend en outre un module d'extension (244) de ladite application portable (242), ledit module d'extension étant apte à établir une communication avec ledit module sécurisé (26) via ladite interface (260) lorsque ladite application portable (242) est exécutée sur ladite station hôte (10).

La présente invention vise également un procédé de communication correspondant entre cette application portable et le module sécurisé.

## Description

La présente invention concerne un dispositif électronique connectable de façon amovible à une station hôte, et comprenant une application portable ainsi qu'un module sécurisé, par exemple un module de carte à puce intelligente. La présente invention vise également un procédé de communication correspondant entre cette application portable et le module sécurisé.

Les applications portables sont un type particulier d'applications généralement utilisées sur des médias amovibles. Ces applications sont particulières en ce qu'elles sont exécutées sur une station hôte, telle qu'un ordinateur ou un appareil de téléphonie mobile, recevant le média amovible sans avoir à être préalablement installées sur cette station hôte. Ainsi, elles peuvent, par exemple, être lancées automatiquement lors de la connexion physique du média à la station hôte. En variante, elles peuvent être lancées manuellement par l'utilisateur.

Les principaux formats d'applications portables connus sont U3 (norme Sandisk, nom déposé) et Framakey (format logiciel libre). Ainsi, l'utilisation de ces applications portables se fait de manière sécurisée, sans laisser d'informations personnelles sur les machines hôtes, notamment sur les disques durs.

Ce contexte des applications portables est très spécifique car, du fait que ces applications ne laissent pas de traces sur les machines hôtes, aucun paramètre ou configuration n'est disponible sur ces dernières pour paramétrer d'éventuels outils additionnels. Des solutions valables pour des applications installées directement sur une machine hôte ne s'appliquent alors pas forcément au cas spécifique des applications portables.

Cette portabilité des applications répond notamment à un accroissement du nomadisme recherché par les utilisateurs informatiques, lesquels transportent, dans une simple clé USB ("*Universal Serial Bus"* selon la terminologie anglo-saxonne) ou autre dispositif équivalent, l'ensemble de leurs données et applications, ainsi que des environnements informatiques propres. C'est ainsi que certaines applications traditionnelles ou standard, telles que des navigateurs web, des logiciels de traitement de texte, des tableurs ou encore des logiciels de base de données ont été développées sous le format portable.

Dans le cadre de la convergence informatique, on souhaite faire cohabiter, au sein d'un même dispositif électronique portable à connexion amovible, tel une clé USB, une carte mémoire MMC ("*MultiMediaCard*" selon la terminologie anglo-saxonne) ou SD ("*Secure Digital card*" selon la terminologie anglo-saxonne), de telles applications avec des modules sécurisés similaires à des cartes à puces.

Les modules sécurisés sont ici vus comme des portions de circuit électroniques sûrs selon des critères de certification, tels que les critères communs définis dans le domaine bancaire, afin de sécuriser des données secrètes au moyen généralement de la mise en oeuvre de protocoles cryptographiques, par exemple à l'aide de clé privée/clé publique ou à l'aide de l'identité. Un tel module peut notamment être une carte à puce associée à un lecteur de carte, ou tout simplement être un circuit intégré directement dans le dispositif électronique portable.

On s'intéresse en particulier à de tels dispositifs électroniques amovibles comprenant une application standard portable et des moyens de module sécurisé.

Cette juxtaposition n'est pas sans poser de problème, notamment lorsque l'on souhaite faire communiquer l'application standard portable exécutée sur la station hôte avec le module sécurisé, par exemple lors d'un processus d'authentification pour transaction bancaire.

En effet, ces applications standard n'ont pas été développées pour communiquer avec des modules sécurisés. En outre, d'éventuels moyens de communication (applicatifs par exemple) prévus sur la station hôte à cette fin sont généralement dédiés et programmés pour fonctionner avec les applications installées directement sur cette même station, car un certain nombre de paramètres est requis au paramétrage de ces moyens de communication. Ces moyens sont alors inappropriés pour réaliser la communication souhaitée dans le cadre de l'utilisation d'une application portable où un tel paramétrage est absent par définition.

L'invention s'inscrit dans le cadre de cette nouvelle problématique, en visant notamment à éviter de laborieuses installations sur la station hôte.

On connaît néanmoins, dans une réalisation récente illustrée par la publication US 2008/0052770 ou WO 2007/116277, un logiciel nommé *"host agent*" hébergé sur une carte à puce et exécuté directement sur la station hôte à laquelle est connectée la carte à puce. Cette dernière comprend également un module sécurisé et un logiciel associé "*card agent*"*.* Ce logiciel "*host agent*" présente la particularité de fournir exclusivement des moyens de communication entre une application déjà installée sur la station hôte, ici un navigateur web, et le module sécurisé via le "*card agent*". L'application standard, ici le navigateur web, est, quant à elle, installée sur la station hôte.

Cette solution présente cependant l'inconvénient de nécessiter un logiciel "*host agent*" spécifique à l'environnement d'exécution de la station hôte, telle système d'exploitation, alors même que ce dernier n'est pas connu lors de la configuration du dispositif électronique portable. Il résulte donc une limitation de portabilité (ou nomadisme) du dispositif électronique connectable de façon amovible et de l'application standard portable qu'il contient.

La présente invention vise donc à pallier les insuffisances de l'art antérieur, et, à cette fin, prévoit l'utilisation d'une extension ou plugiciel, encore connue sous le nom anglo-saxon de *"plug-in",* de l'application portable pour procurer les moyens de communication avec le module sécurisé.

Dans ce dessein, l'invention vise notamment un dispositif électronique agencé pour être connecté de façon amovible à une station hôte, le dispositif comprenant une application portable apte à être exécutée sur ladite station hôte, au moins une interface de module sécurisé, et un module d'extension, par exemple de type plugiciel, de ladite application portable, ledit module d'extension étant apte à établir une communication avec ledit module sécurisé via ladite interface lorsque ladite application portable est exécutée sur ladite station hôte.

Un *plug-in* ou plugiciel ou module d'extension ou, plus simplement, extension d'une application particulière est un programme non autonome qui est activée dans le contexte d'exécution de l'application et qui interagit avec celle-ci pour lui apporter des fonctionnalités supplémentaires. Généralement, le plugiciel se présente sous la forme de scripts définissant un ensemble de fonctions supplémentaires pour l'application.

En étant intégré à l'application par des mécanismes appropriés, par exemple l'instanciation comme décrite plus loin, les fonctions supplémentaires sont accessibles au travers de l'application. Ainsi, l'application, lorsqu'elle est sollicitée pour l'exécution d'une fonction du plugiciel, ne génère plus une erreur comme en l'absence de celui-ci, mais accède au code du script correspondant à la fonction demandée.

Selon l'invention, on munit alors l'application portable du dispositif amovible d'un plugiciel adapté à communiquer avec ou accéder au module sécurisé du dispositif portable, selon notamment des protocoles prévus à cette fin. Ainsi, la portabilité de l'ensemble des fonctions du dispositif électronique amovible portable n'est limitée qu'à celle de l'application portable, et non pas à celle de l'extension plugiciel. Il est par conséquent possible d'utiliser ces fonctionnalités sur toutes les machines hôtes permettant l'exécution de l'application portable indépendamment du plugiciel.

En outre, un même plugiciel peut être utilisé pour différentes versions de l'application standard adaptées chacune à un environnement d'exécution spécifique.

Egalement, la solution proposée par la présente invention permet aux fabricants de dispositifs électroniques amovibles de développer simplement, et généralement eux-mêmes, les composants de communication entre des applications déjà présentes sur le marché et leurs dispositifs amovibles. Ainsi, ils n'ont pas besoin de faire appel aux éditeurs de ces applications.

Dans un mode de réalisation, ladite application portable comprend un navigateur web. En variante, cette application peut être tout type d'outils de bureautique classique, tel qu'un logiciel de traitement de texte, un tableur ou un logiciel de base de données comme vu précédemment.

En particulier, on prévoit que ledit module d'extension comprend au moins une fonction sous forme de script agencée pour être appelée par une page web chargée dans ladite application portable. Cette disposition offre un moyen simple d'automatiser l'accès aux fonctionnalités du module sécurisé.

Selon une caractéristique particulière, ledit module d'extension est instancié, ou chargé, lors du chargement de ladite page web utilisant ladite fonction. Grâce à ces dispositions, on optimise l'utilisation des ressources de la station hôte puisque seuls sont instanciés, et donc chargés en mémoire, les *plug-in* déclarés, et donc généralement utilisés, dans la page web chargée. Cela permet notamment de faire front à la multiplication de tels *plug-in* alors que ceux-ci ne sont généralement pas nécessaires pour toutes les utilisations.

Pour réaliser cette instanciation, on prévoit que ladite page web comprend un script de chargement dudit module d'extension, par exemple sous forme d'une fonction utilisée dans un script Javascript (nom commercial). De telles déclarations sont alors aisées à mettre en oeuvre et de faible coût au regard des gains d'optimisation des ressources de la station hôte qui peuvent être obtenus.

Dans un mode de réalisation de l'invention, le dispositif comprend un module de lancement automatique, généralement de type logiciel dit *autorun,* apte à lancer l'exécution de ladite application portable sur ladite station hôte lors de la connexion dudit dispositif à la station hôte.

Dans un mode de réalisation, le dispositif comprend un concentrateur, par exemple hub USB, auquel est reliée une première mémoire stockant au moins ladite application portable, et un module sécurisé apte à communiquer via ladite interface et ledit concentrateur, donc selon l'exemple à communiquer selon la norme USB.

Selon une architecture choisie, le dispositif comprend une mémoire stockant au moins ladite application portable, et un module sécurisé relié à ladite interface, lesdits mémoire et module sécurisé étant intégrés sur deux circuits distincts, éventuellement interconnectés par exemple à l'aide du hub USB et d'un bus dédié.

En variante, lesdits mémoires et module sécurisé sont portés par un même circuit intégré.

Dans un mode de réalisation impliquant deux circuits distincts, ladite interface est un lecteur de carte à puce. Cette configuration permet de changer aisément de carte à puce comme module sécurisé dans le dispositif, afin de répondre notamment à un grand nombre d'utilisations du dispositif.

En particulier, le dispositif comprend un module sécurisé de type carte à puce relié audit lecteur, ladite carte à puce étant conforme au format ID-000 selon la norme ISO 7816.

Dans le cas d'un module sécurisé sous forme de circuit totalement intégré au dispositif portable, l'interface peut se résumer à une simple connexion entre ce circuit et les autres composants du dispositif utilisés pour assurer la communication avec l'extérieur du dispositif portable.

Selon une caractéristique de l'invention, ladite communication entre l'application portable exécutée sur la station hôte et le module sécurisé comprend des commandes conformes à la norme ISO 7816 encapsulées dans un protocole de communication. Cela permet de conserver un langage classique prévu pour les modules sécurisés, ici les commandes APDU, tout en satisfaisant aux normes classiques d'échanges entre des médias amovibles et une machine hôte, ici par exemple le protocole USB. A cette fin, on prévoit, au niveau de ladite interface, des moyens, de préférence logiciels, aptes à encapsuler ou dés-encapsuler lesdites commandes APDU dans ou depuis des données conformes au protocole de communication, dans l'exemple USB.

Selon un mode de réalisation, le dispositif comprend un module sécurisé relié à ladite interface, ledit module sécurisé étant sécurisé conformément aux critères communs ou à la norme FIPS.

Selon un mode de réalisation de l'invention, le dispositif comprend un module sécurisé relié à ladite interface et comprenant des moyens cryptographiques.

En particulier, le dispositif comprend un module sécurisé relié à ladite interface, et ledit module d'extension ainsi que ledit module sécurisé comprennent des moyens cryptographiques correspondants agencés pour établir conjointement une communication sécurisée entre eux. Ce peut être, à titre d'exemple, des clés privées/publiques de chiffrement accompagnées de moyens de calcul correspondants. On obtient ainsi, outre la sécurité au niveau du module sécurisé, un degré de sécurité renforcé lors des échanges de données entre l'application standard portable et le module sécurisé.

L'invention a également trait à un procédé de communication entre une application portable, stockée dans un dispositif électronique, et un module sécurisé compris dans ledit dispositif électronique, le procédé comprenant l'exécution de ladite application portable sur une station hôte, à laquelle est connecté, de façon amovible, ledit dispositif électronique ladite application portable mettant en oeuvre au moins une instruction. En outre,
- le procédé comprend le chargement d'au moins un module d'extension de ladite application portable ; et
- ladite instruction fait appel à au moins une fonction dudit module d'extension, ladite fonction étant apte à établir une communication avec ledit module sécurisé.

Comme suggéré précédemment, on comprend par "module compris dans le dispositif" tout module intégré directement dans le dispositif, généralement au travers d'un circuit intégré, mais également tout module rapporté dans le dispositif par exemple via un lecteur de module *ad hoc.*

Dans un mode de réalisation de l'invention, ladite application portable comprend un navigateur web et l'exécution de l'au moins une instruction comprend le chargement, par ledit navigateur web, d'une page web comprenant une instruction faisant appel à ladite au moins une fonction dudit module d'extension. Comme indiqué précédemment, cette réalisation à l'aide d'un navigateur web et de pages web associées est particulièrement aisée à mettre en oeuvre, en termes de développement et d'intégration, afin de tirer profit des fonctionnalités du module sécurisé accompagnant l'application portable.

En particulier, ladite page web comprend une déclaration d'instanciation dudit module d'extension, et ledit chargement du module d'extension est réalisé, lors du chargement de ladite page web, par l'exécution de ladite déclaration d'instanciation. Comme indiqué précédemment, on arrive ainsi à optimiser efficacement l'utilisation des ressources de la station hôte. En variante, l'instanciation ne peut avoir lieu qu'après le chargement complet de la page web, par exemple lorsqu'une fonction type Javascript (nom commercial) de la page web est exécutée notamment en cliquant sur un bouton de cette page web.

Selon une configuration de l'invention, le procédé comprend une étape de lancement automatique de ladite application portable lors de l'insertion dudit dispositif électronique dans ladite station hôte.

Selon un mode de réalisation, l'exécution de ladite instruction génère une requête à destination dudit module sécurisé, par exemple un OTP ou une clé ou toute autre information confidentielle, ladite réponse à la requête étant affichée sur la station hôte par ladite application portable.

Selon une variante, ou éventuellement en combinaison, ladite réponse à la requête comprend des données et au moins une adresse cible d'un serveur distant connecté à un même réseau de communication que ladite station hôte, le procédé comprenant alors l'exécution de ladite réponse par l'application portable de sorte à entraîner l'émission desdites données vers l'adresse cible. Cette réalisation permet notamment d'automatiser, et donc de rendre plus efficace et plus rapide, une procédure de communication, par exemple d'authentification, d'un utilisateur auprès d'un serveur distant. Ces échanges peuvent notamment être réalisés au travers de requêtes http.

De façon optionnelle, le procédé peut comprendre des caractéristiques se rapportant aux caractéristiques du dispositif présentées ci-dessus.

D'autres particularités et avantages de l'invention apparaîtront encore dans la description ci-après, illustrée par les dessins ci-joints, dans lesquels :
- la **figure 1** représente une vue générale d'un système pour la mise en oeuvre de l'invention;
- la **figure 2** représente un premier exemple d'architecture d'un dispositif électronique portable selon l'invention;
- la **figure 3** illustre les échanges de messages entre les différentes entités impliquées par la mise en oeuvre de l'invention selon la **figure 2**;
- la **figure 4** représente un premier exemple de page web HTML à l'appui des échanges de la **figure 3**;
- la **figure 5** représente un deuxième exemple de page web HTML à l'appui des échanges de la **figure 3**; et
- la **figure 6** représente un deuxième exemple d'organisation d'un dispositif électronique portable selon l'invention.

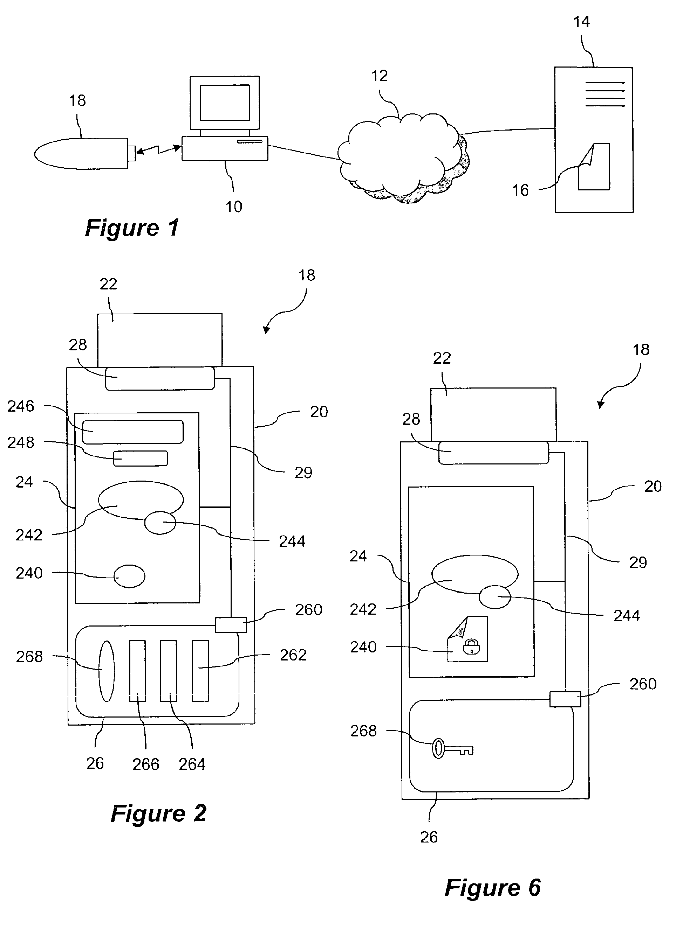

En référence aux **figures 1 à 5**, on décrit une première application de l'invention utilisant une application standard portable de type navigateur web.

Sur la **figure 1**, on a représenté un système pour mettre en oeuvre cette première application.

Une station hôte 10, ici un ordinateur personnel muni d'un port USB, est connecté à un réseau de communication 12, ici l'Internet, par lequel il communique, par exemple via le protocole http ("*HyperText Transfer Protocol*" selon la terminologie anglo-saxonne), avec un serveur distant 14.

En variante la station hôte peut être un téléphone portable, un assistant personnel et d'une façon générale tout équipement doté de capacités de traitement et possédant une interface pouvant recevoir un dispositif électronique portable.

Le serveur distant 14 possède, en mémoire, des pages HTML 16 ("*HyperText Markup Language*" selon la terminologie anglo-saxonne) constituant un site web auquel un utilisateur souhaite accéder. Ce site web peut notamment être sécurisé et nécessiter une authentification, par la saisie d'un mot de passe ou d'une clé par exemple.

Du côté de l'utilisateur, ce dernier dispose d'un dispositif électronique portable 18, ici une clé USB. En variante, ce dispositif électronique peut être une carte mémoire MMC ou SD, ou une carte à puce.

La clé USB 18 peut être connectée, de façon amovible, à l'ordinateur personnel 10 au travers d'une interface USB.

Sur la **figure 2**, on a représenté un premier exemple d'architecture d'un dispositif électronique portable selon l'invention, notamment pour l'application visée ci-dessus.

La clé USB 18 comprend un corps 20 et un connecteur 22 apte à coopérer avec un connecteur USB correspondant prévu sur la station hôte 10.

Dans le corps, la clé USB 18 présente une mémoire de masse 24, par exemple de type flash, prévue pour le stockage classique de données, un module de circuit sécurisé 26 et un concentrateur ou hub USB 28 auquel sont connectés, d'une part, la mémoire flash 24 et le module de circuit sécurisé 26, et d'autre part, le connecteur USB 20.

La mémoire flash 24, ou plus précisément son contrôleur, ainsi que le module sécurisé 26 sont prévus pour communiquer selon le protocole USB, en utilisant éventuellement un autre protocole de niveau supérieur encapsulé par les données dudit protocole USB. Ainsi, une communication avec l'ordinateur personnel 10, via le connecteur USB 20, est possible. Des moyens classiques de circuit ou logiciel pour permettre la mise en oeuvre du protocole USB, éventuellement comme encapsulant des protocoles de niveau supérieur peuvent être utilisés à cet effet.

Le module sécurisé 26 est ici un circuit de calcul dédié de type module de carte à puce. Un tel module 26 satisfait aux évaluations des circuits sécurisés, par exemple conformément aux critères communs (correspondant à la norme ISO 15408) à niveau supérieur ou égal à EAL4 (acronyme de "Evaluation Assurance Level 4" pour niveau d'assurance d'évaluation 4), typiquement à niveau EAL4+.

On peut distinguer, dans ce module, une interface 260 sur le bus USB 29 reliant au hub 28, des ressources d'exécution type CPU 262, des moyens de mémoire type mémoire non volatile ou morte 264 et mémoire flash 266, et des moyens cryptographiques 268, éventuellement sous la forme de programmes de chiffrement et de déchiffrement, et de clés associées stockées en mémoire morte 264.

En particulier, ce module sécurisé 26 peut recevoir des commandes APDU conformément à la norme ISO 7816 qui sont encapsulées dans des paquets du protocole USB. L'interface 260 peut notamment être dédiée à l'encapsulation USB (pour la transmission sur le bus 29) et à la désencapsulation USB (dans le cas de la réception de données) des commandes APDU.

Dans un mode de réalisation, on prévoit que ledit module sécurisé 26 est un circuit intégré à même la clé USB 18, de sorte qu'il est vu par et qu'il fonctionne vis-à-vis de la station hôte 10 comme un dispositif de carte à circuit intégré, également connu sous l'appellation ICCD pour "*Integrated Circuit(s) Card Device*".

En variante, ledit module sécurisé 26 peut être prévu comme une carte à puce au sens classique. La carte à puce est alors notamment au format ID-000 au sens de la norme ISO 7816, par exemple de la dimension d'une carte SIM ("*subscriber identity module*" selon la terminologie anglo-saxonne) utilisée dans les équipements de téléphonie mobile. Dans ce cas, l'interface 260 prévue est du type lecteur de carte à puce. Cette configuration permet, tout en conservant la même clé USB 18, et donc les données et applications stockées dans la mémoire 24, de changer les modules sécurisés, par exemple pour des applications différentes ou pour des niveaux de sécurité variables. Dans ce cas, la carte à puce 26 fonctionne vis-à-vis de la station hôte 10 comme un dispositif d'interface de carte à circuit, également connu sous l'appellation CCID pour *"Circuit(s) Card Interface Device".*

La mémoire de masse 24 de la clé USB 18 comprend des données propres 240 à l'utilisateur et au moins une application portable standard 242, ici un navigateur web portable, par exemple Firefox (nom commercial), auquel on a ajouté un plugiciel ou *plug-in* 244. Selon l'invention, ce *plug-in* 244 comprend des moyens logiciels, ici des fonctions définies par des scripts, permettant l'accès au module sécurisé 26 (ou plus précisément à des moyens d'exécution de celui-ci). A titre illustratif, ces scripts sont prévus pour générer des commandes APDU à destination du module sécurisé 26 dans la clé USB.

La mémoire 24 comprend également des moyens d'émulation d'un CD-ROM 246 associés à un programme 248 de lancement automatique d'applications, en particulier de l'application 242, également appelé programme *autorun.* Ce programme *autorun* est chargé et exécuté automatiquement par la station hôte 10 à la connexion de la clé 18.

En prévoyant un fichier *autorun.ini,* bien connu de l'homme du métier, dans la mémoire 24, il est possible de lancer automatiquement le navigateur web 242 dès la connexion de la clé 18 à la station hôte 10.

Il est entendu qu'un lancement classique de l'application 242 par l'utilisateur via une interface dédiée sur la station hôte 10 est envisagé en variante ou en combinaison si plusieurs applications 242 sont prévues.

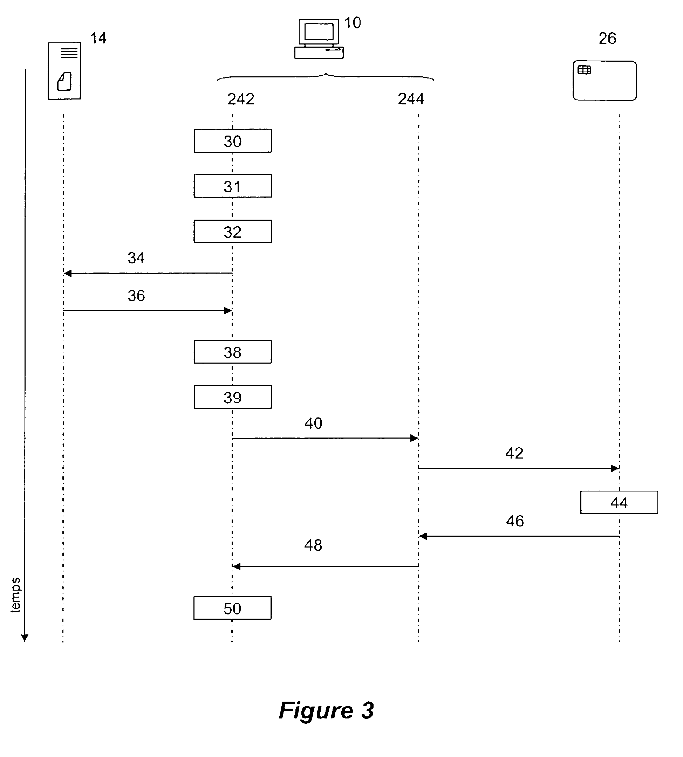

On décrit maintenant, à l'appui des **figures 3 à 5**, des exemples d'accès au site web hébergé sur le serveur distant 14.

Sur la **figure 3**, on a représenté les échanges de messages entre les différentes entités impliquées par la mise en oeuvre de l'invention.

Dans une première étape, on connecte la clé USB 18 ci-dessus sur un port USB de la station hôte 10. Le programme *autorun.exe* s'exécute automatiquement, lit le fichier *autorun.ini* qui référence l'application Firefox 242. Cette dernière est donc lancée et exécutée (30) par la station hôte 10 directement depuis son emplacement de mémoire dans la clé 18. A titre indicatif, cette exécution met en oeuvre généralement une copie de l'application dans la mémoire vive du système d'exécution de la station hôte 10.

A l'étape 32, une sollicitation d'ouverture de la page web 16 est réalisée au niveau du navigateur web 242. Cette sollicitation peut être manuelle par la saisie d'une adresse http par l'utilisateur sur une interface prévue à cet effet. En variante, cette adresse http peut être mémorisée dans la mémoire 240 de la clé USB, par exemple comme page d'accueil du navigateur web.

A l'étape 34, le navigateur émet une requête http, typiquement une requête GET, à destination du serveur web 14, visant à l'obtention de la page 16 sollicitée.

A l'étape 36, le serveur web 14 transmet une réponse http à la requête de l'étape 34, à destination du navigateur web 242. Cette réponse contient la page HTML 16.

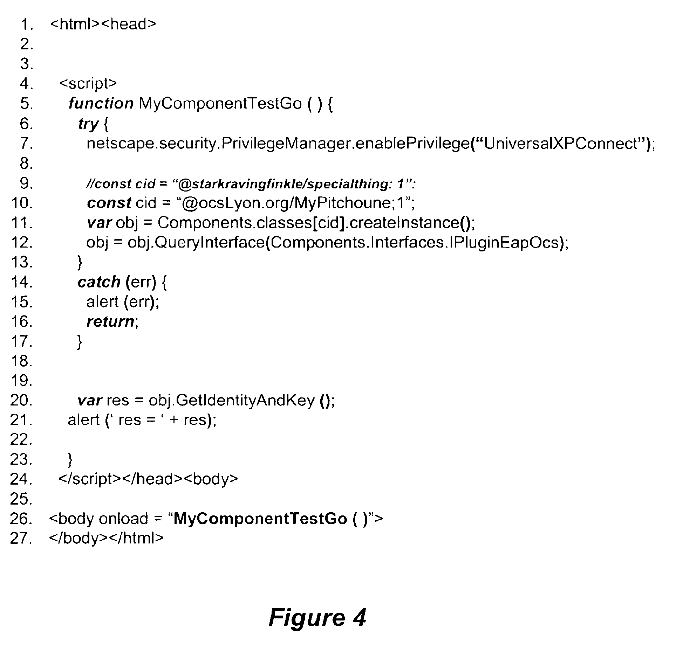

Un premier exemple de page HTML 16 comprenant 27 lignes est fourni en **figure 4**.

A l'étape 38, le navigateur 242 exécute et charge la page HTML 16 pour son affichage le cas échéant.

Ici, le chargement est exempt de tout affichage comme le suggère le corps de la page HTML en ligne 26 sur la **figure 4**. La fonction *onLoad* déclenche la méthode *MyComponentTestGo()* au moment du chargement et de l'exécution de la page.

Cette méthode javascript comprend une première phase (lignes 6 à 13) permettant le chargement (étape 39) du *plug-in* 244 nécessaire à la poursuite de la procédure (les lignes 14 à 17 gérant le renvoi d'exception). En effet, plusieurs *plug-in* peuvent être prévus pour une application 242 donnée. Ainsi, en fonction des utilisations, certains *plug-in* sont chargés et d'autres non.

Ici, la ligne 12 sur la **figure 4** réalise une instanciation du *plug-in* nommé *IPluginEapOcs,* à l'aide du composant *Composants.Interfaces.* Une fois cette ligne de script exécutée, le *plug-in* 244 est chargé et les fonctions qu'il contient sont disponibles directement depuis l'application 242. On note en particulier que, même si l'on a représenté sur la **figure 3** le navigateur web et le *plug-in* dissociés, ce dernier est en fait exécuté dans le navigateur de manière classique pour les *plug-in.*

A l'étape 40, le chargement de la page web 16 se poursuit par l'exécution de la ligne 20 du script appelant la fonction ou méthode *GetldentityAndKey()* prévue dans le *plug-in* 242. Cette fonction est notamment prévue sous forme de script afin d'établir une communication, voire un dialogue, avec le module sécurisé 26.

Bien qu'ici, on ait représenté cette fonction sans paramètre, on prévoit généralement que des paramètres, tels qu'un code ou une identification saisi par l'utilisateur, soient utilisés par cette fonction, notamment transmis au module sécurisé 26 pour calcul et authentification. La fonction est prévue pour former un message ou des commandes APDU à l'attention du module sécurisé 26. D'autres formats ou types de commande peuvent être utilisés en variante.

A l'étape 42, le *plug-in* génère une commande APDU à partir des éventuels paramètres passés dans la fonction *GetldentityAndKey()* et l'envoie au module sécurisé 26 via la voie USB formée du port USB, du connecteur 22, du bus interne 29 à la clé 18 et de l'interface 260.

A l'étape 44, le module sécurisé 26 exécute la commande APDU reçue. A titre d'exemple, ce peut être une vérification de PIN ("*Personal Identification Number*")*,* la génération d'un mot de passe à usage unique ou OTP, la mise en place d'une communication chiffrée entre les deux entités par l'échange de clés ou le chiffrement d'un nombre aléatoire.

A l'étape 46, le module sécurisé 26 retourne au *plug-in* 244 une réponse à la commande APDU, par exemple un mot de passe à usage unique ou un nombre chiffré.

A l'étape 48, cette réponse au format APDU est récupérée par le navigateur web 242 (car en définitive c'est lui qui exécute le *plug-in*). Ici, la réponse est contenue dans la variable *res* (voir ligne 20 sur la **figure 4**), après extraction du contenu de la réponse APDU par les fonctions du *plug-in.*

A l'étape 50, le navigateur web 242 exploite la réponse res reçue. Ici, la réponse est affichée, dans une fenêtre contextuelle d'alerte, comme indiqué en ligne 21 sur la **figure 4**.

En variante ou en combinaison, une requête http peut être renvoyée automatiquement par le navigateur web 242 au serveur 14, cette requête étant générée à partir de la réponse res. A titre d'exemple, l'identité sécurisée de l'utilisateur stockée dans le module sécurisé 26, le mot de passe à usage unique ou le nombre chiffré générés par le module sécurisé 26 peut être ici renvoyé au serveur 16, lequel après vérification permettra à l'utilisateur d'entrer dans une partie sécurisé du site web qu'il héberge.

Ce relais automatique du mot de passe, nombre chiffré ou tout autre information par le navigateur 242 vers le serveur web 14 peut être envisagé en utilisant par exemple un serveur web dans le module sécurisé, les commandes APDU visées à l'étape 42 étant incorporées dans les requêtes http transmises. A titre d'exemple, on peut prévoir pour l'étape 42 une page HTML (encapsulé dans un protocole USB le cas échéant) à destination du module sécurisé 26 comprenant:

```
 <HTML>
    <HEAD>
         <TITLE>Cryptage</TITLE>
         <META http-equiv="Refresh" content=
         "1; URL=http://module sécurisélprocessAPDU?ID=123&APDU=09
                                           A52C6B7679">
    </HEAD>
    <BODY> </BODY>
 </HTML>
```

Ainsi, au chargement de cette page par le serveur web embarqué dans le module sécurisé 26, la commande APDU renseignée est transmises aux moyens d'exécution prévus à cet effet, lesquels calculent alors la valeur chiffrée du nombre transmis, ici 09A52C6B7679 en hexadécimal.

Le serveur web du module sécurisé 26 retourne alors au navigateur web 242 la page suivante (au format APDU):

```
 <HTML>
    <HEAD>
         <TITLE>Nombre chiffré</TITLE>
         <META http-equiv="Refresh" content=
         "1; URL=http:/serveurdistant/access.cgi?ID=123&pwd=672F9DD4
                                                9000">
    </HEAD>
    <BODY>Veuillez patienter, connexion...</BODY>
 </HTML>
```

Ainsi, le résultat res=672F9DD49000 de la commande APDU est reçu par le navigateur 242, lequel du fait de la fonction *Refresh* prévue dans le script HTML, transmet au serveur distant 14 la valeur chiffrée 672F9DD49000.

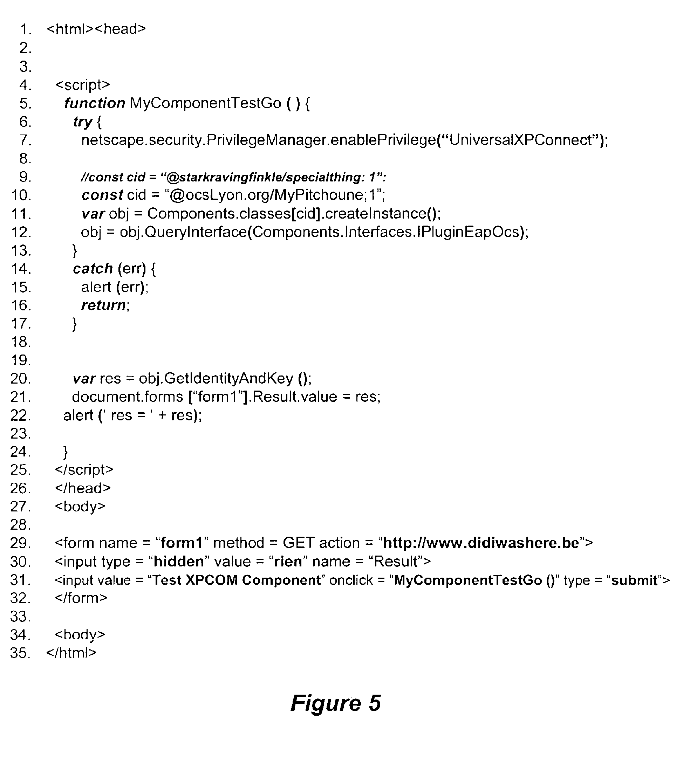

Dans l'exemple de la **figure 5**, on décrit un deuxième exemple de page HTML 16 comprenant 35 lignes, chargée par le navigateur 242 lors de l'étape 38.

A l'étape 38 justement, le navigateur 242 affiche le formulaire nommé *form1* (voir ligne 29) et comprenant un bouton *Test XPCOM Component* (voir ligne 30).

Lorsque l'utilisateur clique sur ledit bouton, la méthode *MyComponentTestGo()* est appelée et exécutée (voir ligne 31 précisant la fonction *onClick*).

Les étapes décrites ci-dessus en lien avec la **figure 4** sont de nouveau exécutées jusqu'à l'obtention du résultat res en réponse à une commande APDU générée par la fonction *GetldentityAndKey* (ligne 20 de la **figure 5**).

On observe cette fois-ci que la suite du script javascript de la page HTML 16 se poursuit à la ligne 21 par l'affectation de la valeur résultat res, au composant *Result* du formulaire *form1.*

En outre, ici du fait de la précision *submit* pour le bouton *Test XPCOM Component,* lorsque l'utilisateur a cliqué sur celui-ci, tout le formulaire *form1,* y compris le résultat res, par exemple l'identité "123@identity.org", est soumis à l'exécution de l'action définie pour le formulaire, ici en ligne 29. Ainsi, cette action commande l'envoi, par le navigateur 242, d'une requête http (méthode GET définie dans la syntaxe des formulaires HTML) à l'adresse spécifiée en ligne 29: http://www.didiwashere.be/?Result=123@identity.org.

En référence maintenant à la **figure 6**, on décrit une deuxième applications de l'invention utilisant une application standard de type logiciel de traitement de texte, tel Word (nom commercial). Les déclinaisons de réalisation évoquées ci-dessus en lien avec les **figures 1 à 5** sont également applicables à cette deuxième application.

Dans cet exemple, la clé USB 18 mémorise une application portable 242 de type logiciel de traitement de texte, ainsi qu'un fichier 240 au format dudit logiciel et chiffré avec une clé de chiffrement 268. Le programme de traitement de texte 242 est enrichi d'une extension *plug-in* 244 lui procurant une fonctionnalité de requêtage au module sécurisé 26 sous forme de commandes APDU, comme décrit ci-après.

Pour sa part, la clé de chiffrement 268, qui doit être maintenue secrète, est mémorisée en mémoire morte 264 du module sécurisé 26.

Lorsque l'utilisateur veut accéder en lecture au fichier chiffré 240, il connecte la clé USB 18 à la station hôte 10.

L'application traitement de texte 242, munie de son extension 244, est chargée en mémoire vive et lancée sur la station hôte 10. Un lancement manuel ou automatique est envisagé. Dans cet exemple, l'extension 244 est automatiquement chargée, en une étape 31 de la **figure 3**, dès le lancement de l'application 242 (étape 30 de la **figure 3**).

L'utilisateur sélectionne ensuite le fichier chiffré 240 à ouvrir à l'aide du logiciel de traitement de texte 242.

Cette sélection provoque la copie du fichier chiffré 240 en mémoire vive de la station hôte 10.

Puis le programme de traitement de texte 242, via son *plug-in,* communique le fichier chiffré 240 au module sécurisé 26. Cette transmission peut notamment être faite sous forme de commandes APDU encapsulées dans le protocole de transmission USB.

A réception de la commande APDU correspondante, le module sécurisé 26 accède à la clé de chiffrement 268 et, par des procédés classiques de déchiffrement par clé, effectue le déchiffrement du fichier 240 reçu dans la commande APDU.

Le fichier ainsi déchiffré est renvoyé, en réponse à la commande APDU, à l'application de traitement de texte 242 exécutée sur la station hôte 10, via son *plug-in* 244.

Le fichier déchiffré, ainsi au format "clair" pour l'application 242, est affiché par cette dernière sur un écran de la station hôte 10. L'utilisateur peut ainsi accéder aux données contenues dans le fichier 240 pour éventuellement les modifier.

On notera que le processus de sauvegarde du fichier ainsi modifié est similaire à celui décrit ci-dessus à ceci près que la commande APDU transmise au module sécurisé 26 avec le fichier modifié déchiffré vise le chiffrement de ce fichier modifié. A réception du fichier modifié chiffré, l'application 242 effectue un enregistrement classique en mémoire flash 24 de la clé USB 18.

Les exemples qui précèdent ne sont que des modes de réalisation de l'invention qui ne s'y limite pas.

En particulier, on pourra prévoir que l'instanciation du *plug-in* 244 visée à l'étape 39 n'est pas effectuée automatiquement lors du chargement de la page web 16, mais sur action de l'utilisateur, par exemple lors de l'appui sur le bouton *Test XPCOM Component.* La définition HTML de ce dernier précise alors la méthode *MyComponentTestGo()* sur un événement Javascript, par exemple onClick() ou onMouseOver().

## Revendications

1. Dispositif électronique (18) agencé pour être connecté, de façon amovible, à une station hôte (10), le dispositif comprenant une application portable (242) apte à être exécutée sur ladite station hôte (10) et au moins une interface (260) de module sécurisé (26), **caractérisé en ce qu'**il comprend un module d'extension (244) de ladite application portable (242), ledit module d'extension étant apte à établir une communication avec ledit module sécurisé (26) via ladite interface (260) lorsque ladite application portable (242) est exécutée sur ladite station hôte (10).

2. Dispositif (18) selon la revendication précédente, dans lequel ladite application portable (242) comprend un navigateur web.

3. Dispositif (18) selon la revendication précédente, dans lequel ledit module d'extension (244) comprend au moins une fonction sous forme de script agencée pour être appelée par un page web (16) chargée dans ladite application portable (242).

4. Dispositif (18) selon la revendication précédente, dans lequel ledit module d'extension (244) est instancié lors du chargement de ladite page web (16) utilisant ladite fonction.

5. Dispositif (18) selon l'une quelconque des revendications précédentes, comprenant un module de lancement automatique (248) apte à lancer l'exécution de ladite application portable (242) sur ladite station hôte (10) lors de la connexion dudit dispositif (18) à la station hôte (10).

6. Dispositif (18) selon l'une quelconque des revendications précédentes, comprenant un concentrateur (28) auquel est reliée une première mémoire (24) stockant au moins ladite application portable (242), et un module sécurisé (26) apte à communiquer via ladite interface (260) et ledit concentrateur (28).

7. Dispositif (18) selon l'une quelconque des revendications précédentes, dans lequel ladite interface (260) est un lecteur de carte à puce.

8. Dispositif (18) selon la revendication précédente, comprenant un module sécurisé (26) de type carte à puce relié audit lecteur, ladite carte à puce étant conforme au format ID-000 selon la norme ISO 7816.

9. Dispositif (18) selon l'une quelconque des revendications précédentes, dans lequel ladite communication entre l'application portable (242) exécutée sur la station hôte (10) et le module sécurisé (26) comprend des commandes conformes à la norme ISO 7816 encapsulées dans un protocole de communication.

10. Dispositif (18) selon l'une quelconque des revendications précédentes, comprenant un module sécurisé (26) relié à ladite interface (260), et comprenant des moyens cryptographiques (268).

11. Procédé de communication entre une application portable (242), stockée dans un dispositif électronique (18), et un module sécurisé (26) compris dans ledit dispositif électronique (18), le procédé comprenant l'exécution (30) de ladite application portable (242) sur une station hôte (10), à laquelle est connecté, de façon amovible, ledit dispositif électronique, ladite application portable (242) mettant en oeuvre au moins une instruction;
**caractérisé en ce que** :
- le procédé comprend le chargement (31, 39) d'au moins un module d'extension (244) de ladite application portable (242); et
- ladite instruction fait appel à au moins une fonction dudit module d'extension (244), ladite fonction étant apte à établir une communication avec ledit module sécurisé (26).

12. Procédé selon la revendication précédente, dans lequel ladite application portable (242) comprend un navigateur web et l'exécution (38) de l'au moins une instruction comprend le chargement, par ledit navigateur web (242), d'une page web (16) comprenant une instruction faisant appel à ladite au moins une fonction dudit module d'extension (244).

13. Procédé selon la revendication précédente, dans lequel ladite page web (16) comprend une déclaration d'instanciation dudit module d'extension (244), et ledit chargement (31, 39) du module d'extension (244) est réalisé, lors du chargement (30) de ladite page web (16), par l'exécution de ladite déclaration d'instanciation.

14. Procédé selon l'une quelconque des revendications 15 à 17, comprenant une étape de lancement automatique (30) de ladite application portable lors de l'insertion dudit dispositif électronique (18) dans ladite station hôte (10).

15. Procédé selon l'une quelconque des revendications 15 à 18, dans lequel l'exécution (38) de ladite instruction génère une requête à destination dudit module sécurisé (26), ladite réponse (48) à la requête comprend des données et au moins une adresse cible d'un serveur distant (14) connecté à un même réseau de communication (12) que ladite station hôte (10), le procédé comprenant l'exécution (50) de ladite réponse par l'application portable (242) de sorte à entraîner l'émission desdites données vers l'adresse cible.
